# FASCICULE DE BREVET EUROPEEN

(11) **EP 1 565 030 B1**
(45) Date de publication et mention de la délivrance du brevet: **13.06.2007**
(21) Numéro de dépôt: 05290214.5
(22) Date de dépôt: 31.01.2005
(51) Int. Cl.: H04Q 7/38, H04L 12/28

(54) **Procédé de sélection d'un réseau de communications, à partir d'informations sur des points d'accès de réseau local sans fil, transmises par un réseau cellulaire**
Verfahren zur Auswahl eines Kommunikationsnetzes, anhand durch ein mobiles Kommunikationsnetz ausgesandten Informationen über drahtloses LAN Zugriffspunkte
Method for selecting a communications network, based on information about wireless LAN access points transmitted by a cellular network

(30) Priorité: 10.02.2004 FR 0450229
(43) Date de publication de la demande: 17.08.2005
(73) Titulaire: Alcatel Lucent, 75008 Paris (FR)
(72) Inventeur: Fourquin, Xavier, 92310 Sevres (FR); Seurre, Emmanuel, 78000 Versailles (FR)
(74) Mandataire: Korakis-Ménager, Sophie

(56) Documents cités:
- WO-A-02/17572
- WO-A-03/081828
- WO-A-03/107704
- WO-A-20/04008693

## Description

L'invention concerne le domaine des réseaux de communications, et plus précisément l'établissement de communications entre des terminaux de communication mobile à fonctionnement dual et d'autres terminaux de communication distants.

On entend par « terminal de communication mobile à fonctionnement dual » tout type de terminal mobile capable d'échanger des données avec un réseau cellulaire de communications et avec un réseau local sans fil (par exemple de type WLAN pour « Wireless Local Area Network »). Par conséquent, il pourra s'agir, par exemple, d'un téléphone mobile, ou d'un assistant personnel numérique (ou PDA) ou d'un ordinateur portable équipé d'une interface radio de communication, dès lors qu'il est également équipé d'une carte réseau d'accès (ou « Network interface controller ») ou d'un adaptateur sans fil (ou « wireless adapter ») fonctionnant, dans le cas d'un réseau WLAN, selon la norme Ethernet 802.11, quelle qu'en soit la version.

La transmission de certains types de communication de données peut requérir de hauts débits inaccessibles à un terminal mobile de type GSM/GPRS ou UMTS via son réseau cellulaire de rattachement, alors qu'elle pourrait se faire via un réseau local sans fil au moins partiellement contenu dans la zone de couverture dudit réseau cellulaire. Par ailleurs, un terminal mobile peut être dans l'impossibilité, à un instant donné, d'établir une communication via son réseau cellulaire de rattachement du fait que celui-ci est saturé, alors que cette communication pourrait se faire via un réseau local sans fil au moins partiellement contenu dans la zone de couverture dudit réseau cellulaire.

Un terminal mobile de type dual ne pouvant fonctionner qu'en mode cellulaire ou qu'en mode local sans fil (par exemple WLAN), son utilisateur doit donc déterminer avant chaque communication le type du réseau auquel doit se raccorder son terminal compte tenu du type de la communication envisagée. En outre, un terminal mobile de type dual ne peut pas commuter d'un réseau d'un type donné, par exemple cellulaire, vers un réseau d'un autre type, par exemple WLAN, en cours de communication.

WO-A-2004008693 décrit un dispositif client sans fil utilisable dans des réseaux de communication compatibles avec le protocole Internet et adapté à faire une sélection parmi une pluralité d'interfaces réseau pour se connecter au réseau. Le dispositif client teste la disponibilité des interfaces réseau en effectuant un balayage périodique des interfaces disponibles.

WO-A-03081828 décrit un procédé de sélection d'un réseau de communication pour un terminal de communication mobile conforme au préambule de la revendication 1.

L'invention a donc pour but de remédier à cet inconvénient, et notamment de permettre la sélection du type du réseau qui est le mieux adapté aux besoins instantanés d'un terminal de type dual.

Elle propose à cet effet un procédé selon la revendication 1 et un réseau cellulaire selon la revendication 19.

Par exemple, les données d'information représentent pour chaque point d'accès, accessible au sein d'une cellule, au moins son identifiant (et de préférence son nom).

Dans ce cas, la sélection peut par exemple s'effectuer dans une liste d'au moins un point d'accès désigné par son identifiant. Les données d'information, représentatives d'un identifiant de point d'accès de la liste, peuvent être associées à des données d'information représentatives d'au moins une caractéristique du point d'accès. Par exemple, les caractéristiques sont choisies parmi le type de fréquence radio, le débit, le niveau de signal radio, la proximité, le niveau de charge, le coût d'une communication, l'opérateur d'appartenance, et la méthode d'authentification à utiliser.

La liste peut être ordonnée en fonction d'au moins un critère de sélection appliqué à au moins une caractéristique choisie associée à l'identifiant de chaque point d'accès de la liste. Un point d'accès est alors sélectionné en fonction de sa position dans la liste. Le critère de sélection peut par exemple porter sur la comparaison des valeurs en cours de la caractéristique choisie pour les points d'accès de la liste.

En variante, le point d'accès peut être sélectionné en fonction d'une comparaison des valeurs en cours d'au moins une caractéristique choisie pour les points d'accès de la liste.

Par ailleurs, la sélection peut être au moins en partie effectuée par le terminal mobile à partir des données d'information qu'il reçoit du réseau cellulaire. Ainsi, en cas de sélection portant au moins sur le niveau de signal radio, le terminal mobile peut par exemple effectuer des tests de transmission de signaux auprès de chaque point d'accès de la liste, afin de déterminer celui qui offre le niveau de signal radio le plus élevé et sélectionner celui-ci.

Mais, la sélection peut être également effectuée au moins en partie par le réseau cellulaire.

Par exemple, certaines caractéristiques peuvent être choisies en fonction du type de la communication que le terminal mobile souhaite établir. Cela convient plus particulièrement aux situations dans lesquelles la sélection est effectuée par le terminal mobile.

En outre, on peut effectuer une partie au moins de la sélection avant d'établir une communication, ou bien pendant une communication via un réseau cellulaire ou via un réseau local sans fil, de manière à commuter vers le réseau local sans fil ou le réseau cellulaire. Par exemple, en cas de commutation d'un réseau cellulaire vers un réseau local sans fil, on peut mettre en attente la communication établie via le réseau cellulaire, et en cas de nouvelle commutation du réseau local sans fil vers le réseau cellulaire, on peut éventuellement rétablir la communication initialement établie via le réseau cellulaire et mettre fin à la communication via le réseau local sans fil.

D'autres caractéristiques et avantages de l'invention apparaîtront à l'examen de la description détaillée ci-après, et des dessins annexés, sur lesquels :
- la figure 1 illustre de façon schématique un exemple d'installation de communications comportant un réseau cellulaire de communications (RCC), un réseau public de données (RPD) et trois réseaux locaux sans fil (W1 à W3), et
- la figure 2 illustre de façon schématique un exemple de réalisation d'un téléphone mobile (UE) agencé de manière à mettre en oeuvre l'invention.

Les dessins annexés pourront non seulement servir à compléter l'invention, mais aussi contribuer à sa définition, le cas échéant.

L'invention a pour objet de permettre la sélection d'un réseau de communications pour un terminal mobile de communication.

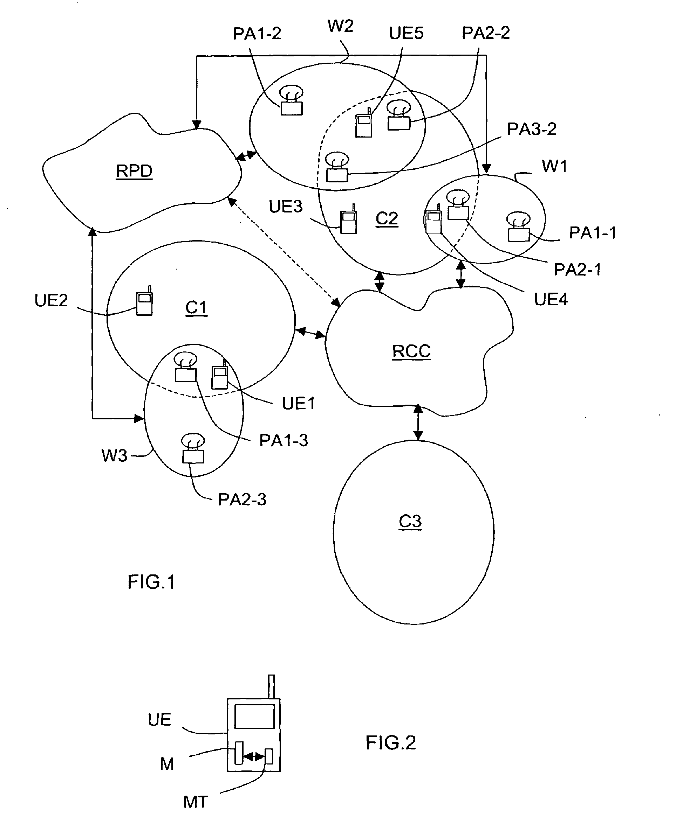

L'installation de communications illustrée sur la figure 1, à titre d'exemple, comporte au moins un réseau cellulaire de communications RCC, un réseau public de données RPD et au moins un réseau local sans fil Wi.

Dans cet exemple d'installation de communications, on a représenté un unique réseau cellulaire RCC, mais il pourrait y en avoir plusieurs. Ce réseau cellulaire RCC appartient à un opérateur de téléphonie mobile et dispose d'une couverture radio définie par un ensemble de cellules Cj (ici j = 1 à 3, mais il peut prendre n'importe quelle valeur non nulle). Par ailleurs, ce réseau cellulaire RCC peut être raccordé à un réseau public de téléphonie, par exemple de type commuté (ou RTC pour « Réseau Téléphonique Commuté », ou encore PSTN pour « Public Switched Telephony Network »), et/ou à un ou plusieurs réseaux publics de type PLMN (pour « Public Land Mobile Network »).

On considère dans ce qui suit que le réseau cellulaire RCC est de type UMTS. Mais, tout autre type de réseau cellulaire peut être envisagé, et notamment les réseaux GSM, GSM/GPRS et EDGE. Les réseaux UMTS étant bien connus de l'homme de l'art, ils ne seront pas décrits en détail. Il est simplement rappelé qu'un réseau UMTS peut, d'une façon très schématique, être résumé à un coeur de réseau (ou « Core Network ») couplé à un réseau d'accès radio ou UTRAN. Le réseau d'accès radio comporte une ou plusieurs stations de base appelées Node Bs et raccordées au Core Network par un ou plusieurs noeuds appelés RNCs (pour « Radio Network Controllers »). Chaque Node B est associé à au moins une cellule Cj couvrant une zone radio dans laquelle peuvent se trouver un ou plusieurs terminaux mobiles de communication UE. Par ailleurs, chaque Node B est chargé du traitement du signal et notamment de la gestion des demandes d'accès au réseau UMTS, effectuées par les terminaux de communication UE qui sont situés dans la cellule Cj qu'il contrôle.

Par ailleurs, on considère dans ce qui suit que le réseau public de données RPD est le réseau Internet.

De plus, on a représenté trois (i = 1 à 3) réseaux locaux sans fil Wi, mais il pourrait y en avoir plus, ou moins, dès lors que l'installation en possède au moins un. Ces réseaux locaux sans fil Wi peuvent appartenir à une unique entreprise, comme par exemple l'opérateur du réseau cellulaire RCC, ou à un groupe d'entreprises rattachées à une même entité, ou encore à des entreprises différentes. On considère dans ce qui suit que les réseaux locaux sans fil Wi sont de type WLAN (pour « Wireless Local Area Network »), répondant à la technologie standardisée 802.11x. Mais, ils pourraient être d'un autre type, comme par exemple Bluetooth ou UWB (pour « Ultra Wide Band »).

Chaque réseau local sans fil Wi comporte classiquement un ou plusieurs points d'accès PAk-i, également appelés « WiFi hotspots », et permettant à des terminaux de communication mobiles à fonctionnement dual UE, de s'y raccorder.

On entend ici par « terminal de communication mobile à fonctionnement dual » tout type de terminal mobile capable d'échanger des données avec un réseau cellulaire de communications RCC et avec un réseau local sans fil Wi. Dans ce qui suit on considérera, à titre d'exemple illustratif, que les terminaux mobiles à fonctionnement dual sont des téléphones mobiles (ou cellulaires) équipés d'une carte réseau d'accès (ou « Network interface controller ») ou d'un adaptateur sans fil (ou « wireless adapter ») fonctionnant selon la norme Ethernet 802.11, dans la version utilisée par les réseaux locaux sans fil Wi. Mais, il pourrait également s'agir d'assistants personnels numériques (ou PDAs) ou d'ordinateurs portables équipés d'une interface radio de communication cellulaire avec un réseau cellulaire de communications RCC, et d'une carte réseau d'accès ou d'un adaptateur sans fil fonctionnant selon la norme Ethernet 802.11 permettant l'accès à un réseau local LAN et/ou à l'Internet. Dans ce qui suit, on appelle module de communication MC les éléments matériels et/ou logiciels du terminal mobile UE chargés d'assurer les communications avec le réseau cellulaire RCC, et plus précisément ses Node Bs, et avec les réseaux locaux sans fil Wi, et plus précisément leurs points d'accès PA.

Dans l'exemple illustré, chaque réseau local sans fil Wi est raccordé au réseau Internet RPD, mais, cela n'est pas une obligation. Bien que cela ne soit pas représenté, ce raccordement s'effectue classiquement par l'intermédiaire d'un routeur périphérique (ou « edge router ») assurant la fonction de serveur d'appels (ou « call server »).

Par ailleurs, dans l'exemple illustré, seul le réseau local sans fil W1 est raccordé au réseau cellulaire RCC, par exemple du fait qu'il appartient à son opérateur, ou du fait que leurs opérateurs ont passé des accords. Mais, cela n'est pas une obligation. Le raccordement du réseau local sans fil W 1 au réseau cellulaire RCC s'effectue également par l'intermédiaire du routeur périphérique. Ce dernier est dans ce cas chargé d'établir les liaisons entre des terminaux mobiles à fonctionnement dual UE, qui sont situés dans la zone de couverture du réseau local sans fil Wi et qui de ce fait sont susceptibles de se raccorder par voie d'ondes aux points d'accès PA auxquels il est couplé, et les réseaux cellulaire RCC et de données RPD.

Il est important de noter qu'un routeur périphérique (ou serveur d'appels) peut être implanté dans le/un contrôleur de points d'accès PA du réseau local sans fil Wi. Cela est en effet particulièrement avantageux car le contrôleur de points d'accès PA dispose d'un accès au réseau de données RPD, par exemple un accès ADSL à l'Internet public, et/ou au réseau cellulaire RCC, par un câble, de préférence de type Ethernet, ou par voie d'ondes, par exemple par un lien radio de type 802.11b. Avec une telle configuration un opérateur de réseau cellulaire RCC peut offrir à ses clients utilisateurs des extensions à très haut débit pour des services de type bout-en-bout, comme par exemple la télévision numérique, la vidéo à la demande, la diffusion (ou « broadcasting ») et la voix sur Internet (ou VolP pour « Voice over Internet Protocol »).

Afin qu'un téléphone mobile UE puisse bénéficier à chaque instant du réseau de communications le mieux adapté à ses besoins, par exemple en terme de ressources réseau ou de coût de communication, l'invention propose de transmettre sur un canal de signalisation choisi de son réseau cellulaire de rattachement RCC, selon un mode choisi, des données d'information sur des points d'accès PAk-i à un réseau local sans fil Wi, accessibles dans la cellule Cj dans laquelle il est situé.

Ainsi, lorsque le téléphone mobile UE écoute ce canal de signalisation, il dispose d'informations qui lui permettent, s'il le désire, de communiquer avec un terminal de communication distant via un point d'accès PAk-i sélectionné en fonction d'au moins un critère de sélection choisi.

Comme on le verra plus loin, la sélection d'un point d'accès PAk-i peut s'effectuer au niveau du réseau cellulaire RCC et/ou au niveau du téléphone mobile UE.

Dans l'exemple illustré, il existe un recouvrement radio partiel, d'une part, entre la cellule C1 et le réseau local sans fil W3, et d'autre part, entre la cellule C2 et les réseaux locaux sans fil W1 et W2. Plus précisément, d'une première part, le point d'accès PA1-3 du réseau W3 se trouve dans la zone de couverture de la cellule C1, d'une deuxième part, le point d'accès PA2-1 du réseau W1 se trouve dans la zone de couverture de la cellule C2, et d'une troisième part, les points d'accès PA2-2 et PA3-2 du réseau W2 se trouvent dans la zone de couverture de la cellule C2.

Par conséquent, d'une première part, le point d'accès PA1-3 est accessible au téléphone mobile UE1 qui se trouve situé à la fois dans sa zone de couverture et dans celle de la cellule C1, d'une deuxième part, le point d'accès PA2-1 est accessible au téléphone mobile UE4 qui se trouve situé à la fois dans sa zone de couverture et dans celle de la cellule C2, et d'une troisième part, les points d'accès PA2-2 et PA3-2 sont accessibles au téléphone mobile UE5 qui se trouve situé à la fois dans leurs zones de couverture et dans celle de la cellule C2.

En revanche, dans cet exemple, les téléphones mobiles UE2 et UE3 qui sont respectivement situés dans les zones de couverture des cellules C1 et C2, mais en dehors des zones de couverture des réseaux W3 et W2, ne peuvent pas, momentanément, bénéficier de la sélection de réseau offerte par l'invention. Il en irait de même de tout téléphone mobile UE qui serait situé en un endroit quelconque de la zone de couverture de la cellule C3, du fait que celle-ci ne possède pas de portion de recouvrement avec la zone de couverture d'un réseau local sans fil.

La sélection peut se faire selon au moins deux modes.

Un première mode consiste à ne transmettre aux téléphones mobiles UE situés dans une cellule Cj que des données d'information représentatives de l'identifiant (et de préférence du nom) de chaque point d'accès PAk-i accessible au sein de ladite cellule Cj. Dans ce cas, chaque téléphone mobile UE dispose en interne d'une mémoire stockant une table de correspondance entre des identifiants de points d'accès PAk-i et une ou plusieurs caractéristiques associées, comme par exemple leur type de fréquence radio (par exemple 11a, 11b, 11g, ...), leur capacité en terme de ressource, leur coût de communication, l'opérateur auquel ils appartiennent, et la méthode d'authentification à utiliser dans le réseau local sans fil Wi.

Deux cas peuvent alors être envisagés selon que les données d'information se présentent sous la forme d'une liste ordonnée ou non ordonnée.

Dans le cas d'une liste ordonnée, les différents points d'accès PAk-i, accessibles au niveau d'une cellule Cj (lesquels peuvent éventuellement appartenir à des réseaux locaux sans fil Wi différents), sont classés en fonction d'au moins un critère de sélection choisi. Le téléphone mobile UE, qui souhaite établir une communication via un point d'accès PA de la liste, extrait de sa mémoire les caractéristiques du point d'accès PA placé en tête de liste puis tente d'établir une liaison radio avec lui (on suppose ici que le téléphone mobile est obligé de respecter l'ordre de la liste). S'il n'est pas situé dans la zone de recouvrement de sa cellule et du point d'accès, il ne peut pas établir cette liaison, de sorte qu'il essaye d'établir une liaison radio avec le point d'accès PA placé en deuxième position sur la liste. Si la liaison est établie, qu'elle est d'un niveau radio suffisant et que le point d'accès dispose de suffisamment de ressources disponibles, la communication est établie. Dans le cas contraire, le téléphone mobile UE essaye d'établir une liaison radio avec le point d'accès PA placé en troisième position sur la liste, et ainsi de suite. Si aucune liaison ne peut être établie avec un point d'accès de la liste, alors la communication ne peut se faire que via le réseau cellulaire de rattachement RCC du téléphone mobile UE, et encore sous réserve que ses capacités le permettent.

Bien entendu une liste peut, dans certaines situations, ne comporter qu'un seul identifiant de point d'accès.

La liste ordonnée est transmise aux téléphones mobiles UE par leur réseau cellulaire de rattachement RCC. Elle peut être déterminée soit au sein du réseau de coeur, soit au sein du réseau d'accès radio, par exemple au niveau des RNCs (mais c'est également possible au niveau des Nodes Bs).

Cet ordonnancement s'effectue en fonction d'au moins un critère de sélection choisi. Parmi les principaux critères de sélection on peut notamment citer le débit, le niveau de signal radio, la proximité, le niveau de charge, le coût de la communication et l'opérateur d'appartenance. Par exemple, l'opérateur du réseau cellulaire RCC peut ne proposer que les points d'accès PAk-i d'un réseau local sans fil Wi, qui lui appartient ou avec lequel il dispose d'un accord d'utilisation, et classer les points d'accès accessibles en fonction de leur niveau de charge. Certains critères de sélection dépendant des valeurs en cours de caractéristiques qui dépendent des mesures effectuées par les téléphones mobiles ou par le réseau d'accès radio, il est donc avantageux qu'une partie au moins de la sélection se fasse au niveau dudit réseau d'accès radio. L'opérateur du réseau cellulaire RCC peut ainsi exploiter, optimiser et personnaliser ses offres de service, notamment en maîtrisant l'évolution de son parc de points d'accès (ou hotspots) PA et la mise à jour des différentes listes de points d'accès.

Dans le cas d'une liste non ordonnée, le téléphone mobile UE, qui souhaite établir une communication via un point d'accès PA de la liste, doit effectuer sa propre sélection au sein de cette liste. Pour ce faire, il doit comparer entre elles les valeurs en cours de l'une au moins des caractéristiques des points d'accès PA de la liste, lesquelles sont stockées dans la table de correspondance, en fonction d'un critère de sélection choisi, par exemple en fonction du type de communication souhaité. Parmi les principaux critères de sélection on peut notamment citer le débit, le niveau de signal radio, la proximité, le niveau de charge, le coût de la communication et l'opérateur d'appartenance. Par exemple, le téléphone mobile UE peut souhaiter obtenir simultanément le plus grand débit possible et le meilleur niveau de signal radio.

Les valeurs en cours des caractéristiques des points d'accès PA sont par exemple diffusées de façon périodique par les Node Bs du réseau cellulaire RCC sur le canal de signalisation, afin qu'elles soient régulièrement rafraîchies.

Une fois que le téléphone mobile UE a ordonné les points d'accès PA de la liste en fonction de son ou ses critères de sélection, il extrait de sa mémoire les caractéristiques du point d'accès PA placé en tête de liste puis tente d'établir une liaison radio avec lui (on suppose ici que le téléphone mobile est obligé de respecter l'ordre de la liste). S'il n'est pas situé dans la zone de recouvrement de sa cellule Cj et du point d'accès PA, il ne peut pas établir cette liaison, de sorte qu'il essaye d'établir une liaison radio avec le point d'accès PA placé en deuxième position sur la liste qu'il a ordonnée. Si la liaison est établie, alors la communication peut être établie (sous réserve d'une disponibilité suffisante de ressources). Si la liaison ne peut pas être établie, le téléphone mobile UE essaye d'établir une liaison radio avec le point d'accès PA placé en troisième position sur la liste qu'il a ordonnée, et ainsi de suite. Si aucune liaison ne peut être établie avec un point d'accès PA de la liste, alors la communication ne peut se faire que via le réseau cellulaire de rattachement du téléphone mobile UE, et encore sous réserve que ses capacités le permettent.

En variante, le téléphone mobile UE peut, une fois qu'il a ordonné les points d'accès PA de la liste, effectuer des tests de transmission de signaux auprès de chacun d'entre eux afin de déterminer ceux qu'il peut effectivement joindre et éventuellement le niveau de signal radio qu'ils offrent. Le classement peut alors être modifié en fonction de ces tests, par exemple de manière à privilégier, et donc à sélectionner, le point d'accès PA qui offre le niveau de signal radio le plus élevé, à valeurs de caractéristiques choisies sensiblement égales.

Un second mode consiste à transmettre aux téléphones mobiles UE, situés dans une cellule Cj, des données d'information représentatives de l'identifiant (et de préférence du nom) de chaque point d'accès PAk-i, accessible au sein de ladite cellule Cj, et de l'une au moins des caractéristiques associées, comme par exemple le type de fréquence radio, le débit, le niveau de charge (ressources disponibles), la proximité, le coût, l'opérateur auquel il appartient, ainsi que la méthode d'authentification à employer dans le réseau local sans fil Wi.

Les points d'accès PA de la liste transmise peuvent être éventuellement classés en fonction d'un critère propre à l'opérateur ou à chaque cellule Cj. Par conséquent, on se retrouve de nouveau dans le cas du premier mode, décrit ci-avant, et dans lequel la liste pouvait être ordonnée ou non. Ce qui différencie ces deux modes, c'est simplement le fait que dans le second mode les données d'information, représentatives de(s) caractéristique(s) sont transmises en même temps que les identifiants des points d'accès PA et non pas stockées dans une mémoire.

Bien entendu, on peut envisager un mode de fonctionnement mixte dans lequel les téléphones mobiles UE stockent dans une mémoire certaines caractéristiques « statiques » des points d'accès PA et reçoivent sur le canal de signalisation de leur réseau cellulaire de rattachement RCC les caractéristiques « dynamiques » des points d'accès PA. On entend ici par « caractéristique statique » une caractéristique qui ne varie pas de façon rapide dans le temps, comme par exemple le débit, la proximité, le coût, la méthode d'authentification ou l'opérateur d'appartenance, et par « caractéristique dynamique » une caractéristique qui peut varier de façon rapide dans le temps, comme par exemple le niveau de signal radio ou le niveau de charge.

Il est important de noter que l'invention n'a pas pour objectif de sélectionner obligatoirement un point d'accès PAk-i à un réseau local sans fil Wi. L'objectif principal de l'invention est en effet de déterminer le réseau de communications qui est le mieux adapté aux besoins immédiats d'un téléphone mobile UE, et s'il s'agit d'un réseau local sans fil Wi, le point d'accès PAk-i qui est censé être le mieux adapté auxdits besoins immédiats. Ainsi, un téléphone mobile UE peut être configuré par son utilisateur, ou par son réseau cellulaire de rattachement RCC, de manière à toujours privilégier le coût de la communication et/ou le débit et/ou le niveau du signal radio. Par conséquent, la sélection peut aboutir à l'établissement d'une communication avec le réseau cellulaire de rattachement RCC, et non avec un point d'accès PAk-i.

Par ailleurs, il est également important de noter que l'invention permet d'effectuer la sélection d'un point d'accès PA soit avant d'établir une communication, soit pendant une communication via un réseau cellulaire RCC ou via un réseau local sans fil Wi.

En effet, dans certaines situations, un utilisateur peut par exemple avoir besoin, en cours de communication avec un terminal distant, d'accéder à l'Internet pour obtenir des informations, alors que le réseau par lequel il a établi la première communication ne le permet pas, ou de transmettre des données, comme par exemple de la vidéo, alors que le réseau par lequel il a établi la première communication ne le permet pas ou ne dispose pas momentanément de suffisamment de ressources disponibles, ou encore de commuter vers le réseau qui offre le coût de communication le plus faible.

Dans de telles situations, un téléphone mobile UE, selon l'invention, est agencé de manière à déterminer, en parallèle de la communication établie, le réseau de communications auquel il peut se connecter et qui est le mieux adapté à ses besoins immédiats.

La commutation peut être « définitive », par exemple lorsque l'utilisateur n'a plus besoin de rétablir la communication avec le terminal distant initial ou qu'il souhaite transmettre des données nécessitant un haut débit au terminal distant initial tout en poursuivant sa conversation. Mais, elle peut être également temporaire, par exemple lorsque l'utilisateur a besoin d'obtenir des informations auprès d'un autre terminal distant ou d'un serveur de données, pour poursuivre sa conversation initiale avec l'utilisateur du terminal distant initial.

Préférentiellement, lorsqu'un téléphone mobile UE souhaite commuter de façon provisoire de son réseau cellulaire de rattachement RCC vers un réseau local sans fil Wi, il effectue une demande de mise en attente auprès d'un serveur dédié dudit réseau cellulaire RCC, puis commute vers le réseau local sans fil Wi par son point d'accès PA sélectionné, éventuellement après avoir demandé l'autorisation à son utilisateur. Une fois qu'il a obtenu ses informations via le réseau local sans fil Wi, il peut ensuite commuter de nouveau vers son réseau cellulaire de rattachement RCC afin de reprendre la conversation initiale.

En revanche, dans le cas d'une commutation définitive, il n'est pas nécessaire d'avertir le réseau cellulaire de rattachement RCC, puisque la commutation met automatiquement fin à la communication initiale.

Il est bien entendu également possible de procéder à une commutation d'un réseau local sans fil Wi vers un réseau cellulaire RCC.

La sélection peut être affinée à l'aide de messages complémentaires fournis par le réseau cellulaire RCC. En effet, dans les environnements dans lesquels, d'une part, le réseau cellulaire RCC est capable de déterminer la position du terminal mobile UE à quelques dizaines de mètres près, et d'autre part, un réseau local sans fil Wi comportant un large réseau de point d'accès PA (ou « wide hotspot ») se trouve au moins partiellement dans une zone de couverture du réseau cellulaire RCC, ledit réseau cellulaire RCC peut transmettre un (ou des) message(s) de signalisation spécifique(s) au terminal mobile (UE), pour lui signaler le ou les points d'accès qui sont par exemple les plus proches ou qui appartiennent à l'opérateur.

En d'autres termes, les informations contenues dans les messages complémentaires peuvent permettre soit de modifier l'ordonnancement d'une liste précédemment transmise au terminal mobile UE, soit de faciliter la sélection au niveau du terminal mobile UE, par exemple en lui évitant d'effectuer des tests sur les niveaux de signal radio offerts par les points d'accès PA qui l'environnent.

On peut par ailleurs envisager que ces messages contiennent des informations dédiées à l'utilisateur du terminal mobile UE, comme par exemple un mot de passe (ou « login »), des clefs, etc.

Comme cela est illustré sur la figure 2, afin de mettre en oeuvre l'invention chaque terminal mobile UE doit être équipé d'un module de traitement MT couplé à son module de communication MC. L'agencement de ce module de traitement MT dépend de la fonction qu'il assure, et plus précisément s'il est chargé ou non de sélectionner lui-même, ne serait-ce que partiellement, le réseau de communications le mieux adapté à ses besoins immédiats. Cependant, quel que soit le mode de fonctionnement envisagé, le module de traitement MT est chargé d'adresser des instructions au module de communication MC afin qu'il établisse les communications avec le réseau sélectionné (Node B ou point d'accès PA sélectionné).

Le module de traitement MT peut être soit pré-configuré, soit configurable par le réseau cellulaire RCC et/ou par son utilisateur de manière à permettre le choix de l'un au moins des critères de sélection et/ou son fonctionnement avec ou sans l'autorisation de son utilisateur, notamment pour ce qui concerne les commutations de réseau lorsque le ou les critères de sélection sont satisfaits.

Par ailleurs, afin de permettre la mise en oeuvre de l'invention le réseau cellulaire RCC doit comporter un ou plusieurs équipements de réseau, comme par exemple des RNCs ou des Node Bs, munis d'un module de gestion MG dont l'agencement dépend de la fonction assurée, et plus précisément du fait qu'ils sont chargés ou non de déterminer les données d'information représentatives des points d'accès PAk-i accessibles au sein de chacune de ses cellules Cj et/ou d'assurer une partie ou la totalité de la sélection.

Les modules de traitement MT et le(s) module(s) de gestion MG selon l'invention peuvent être réalisés sous la forme de circuits électroniques, de modules logiciels (ou informatiques), ou d'une combinaison de circuits et de logiciels.

L'invention ne se limite pas aux modes de réalisation de terminal de communication mobile et de procédé de sélection de réseau de communications décrits ci-avant, seulement à titre d'exemple, mais elle englobe toutes les variantes que pourra envisager l'homme de l'art dans le cadre des revendications ci-après.

## Revendications

1. Procédé de sélection d'un réseau de communications pour un terminal de communication mobile (UE) à fonctionnement dual, comportant les étapes consistant à transmettre dans un réseau cellulaire de communications (RCC) auquel ledit terminal de communication mobile est rattaché, selon un mode choisi, des données d'information sur au moins un point d'accès (PA) à au moins un réseau local sans fil (Wi), accessible dans la cellule (Cj) dans laquelle est situé ledit terminal mobile (UE), et à sélectionner ledit ou l'un desdits points d'accès accessibles en fonction d'au moins un critère de sélection choisi, de sorte que ledit terminal mobile (UE) puisse communiquer avec un terminal de communication distant via ce point d'accès sélectionné, compte tenu desdites données d'information transmises, si celui-ci est mieux adapté à cette communication que ledit réseau cellulaire (RCC), **caractérisé en ce qu'**une partie au moins des données d'information sur ledit au moins un point d'accès (PA) accessible dans la cellule (Cj) est transmise dans ladite cellule par le réseau cellulaire (RCC) en mode de diffusion, de façon périodique, sur un canal de signalisation choisi écouté par ledit terminal mobile (UE).

2. Procédé selon la revendication 1, **caractérisé en ce que** lesdites données d'information représentent pour chaque point d'accès (PA), accessible au sein d'une cellule (Cj), au moins un identifiant de point d'accès.

3. Procédé selon la revendication 2, **caractérisé en ce que** la sélection est effectuée au sein d'une liste d'au moins un point d'accès (PA) désigné par son identifiant.

4. Procédé selon la revendication 3, **caractérisé en ce que** lesdites données d'information, représentatives d'un identifiant de point d'accès (PA) de la liste, sont associées à des données d'information représentatives d'au moins une caractéristique dudit point d'accès (PA).

5. Procédé selon la revendication 4, **caractérisé en ce que** lesdites caractéristiques sont choisies dans un groupe comprenant au moins le type de fréquence radio, le débit, le niveau de signal radio, la proximité, le niveau de charge, le coût d'une communication, l'opérateur d'appartenance et la méthode d'authentification à utiliser.

6. Procédé selon l'une des revendications 4 et 5, **caractérisé en ce que** ladite liste est ordonnée en fonction d'au moins un critère de sélection appliqué à au moins une caractéristique choisie associée à l'identifiant de chaque point d'accès (PA) de la liste, ledit point d'accès (PA) étant alors sélectionné en fonction de sa position dans la liste.

7. Procédé selon la revendication 6, **caractérisé en ce que** ledit critère de sélection porte sur la comparaison des valeurs en cours de la caractéristique choisie pour le ou les points d'accès (PA) de la liste.

8. Procédé selon l'une des revendications 4 et 5, **caractérisé en ce que** ledit point d'accès (PA) est sélectionné en fonction d'une comparaison des valeurs en cours d'au moins une caractéristique choisie pour les points d'accès (PA) de la liste.

9. Procédé selon l'une des revendication 1 à 8, **caractérisé en ce qu'**une partie au moins de la sélection est effectuée par le terminal mobile (UE) à partir des données d'information reçues du réseau cellulaire (RCC).

10. Procédé selon la combinaison des revendications 5 et 9, **caractérisé en ce qu'**en cas de sélection portant au moins sur le niveau de signal radio, ledit terminal mobile (UE) effectue des tests de transmission de signaux auprès de chaque point d'accès (PA) de la liste, de manière à déterminer celui qui offre le niveau de signal radio le plus élevé.

11. Procédé selon l'une des revendication 1 à 10, **caractérisé en ce que** la sélection est effectuée par ledit réseau cellulaire (RCC).

12. Procédé selon l'une des revendication 6 à 8 en combinaison avec l'une des revendications 9 à 11, **caractérisé en ce que** ladite caractéristique est choisie en fonction du type de la communication que ledit terminal mobile (UE) souhaite établir.

13. Procédé selon l'une des revendication 1 à 12, **caractérisé en ce que** l'on effectue une partie au moins de ladite sélection avant d'établir une communication.

14. Procédé selon l'une des revendication 1 à 12, **caractérisé en ce que** l'on effectue une partie au moins de ladite sélection pendant une communication via un réseau cellulaire (RCC), respectivement un réseau local sans fil (Wi), de manière à commuter vers un réseau local sans fil (Wi), respectivement un réseau cellulaire (RCC).

15. Procédé selon la revendication 14, **caractérisé en ce qu'**en cas de commutation d'un réseau cellulaire (RCC) vers un réseau local sans fil (Wi), on met en attente la communication établie via le réseau cellulaire (RCC).

16. Procédé selon la revendication 15, **caractérisé en ce qu'**en cas de nouvelle commutation dudit réseau local sans fil (Wi) vers ledit réseau cellulaire (RCC), on rétablit la communication initialement établie via le réseau cellulaire (RCC) et on met fin à la communication via ledit réseau local sans fil (Wi).

17. Procédé selon l'une des revendication 1 à 16, **caractérisé en ce que** les données d'information sur ledit au moins un point d'accès sont transmises par le réseau cellulaire (RCC) sous la forme d'une liste ordonnée de points d'accès.

18. Procédé selon la revendication 17, **caractérisé en ce que** ladite liste est ordonnée en fonction d'au moins un critère de sélection choisi dans un groupe comprenant le débit, le niveau de signal radio, la proximité, le niveau de charge, le coût d'une communication et l'opérateur d'appartenance.

19. Réseau cellulaire de communications (RCC) apte à transmettre dans une cellule dudit réseau cellulaire (RCC), selon un mode choisi, des données d'information sur au moins un point d'accès (PA) à au moins un réseau local sans fil (Wi), accessible dans ladite cellule (Cj), lesdites données d'information transmises étant destinées à permettre à un terminal de communication mobile (UE) à fonctionnement dual rattaché audit réseau cellulaire situé dans ladite cellule de communiquer avec un terminal de communication distant via un point d'accès sélectionné parmi ledit au moins un point d'accès accessible dans ladite cellule (Cj) en fonction d'au moins un critère de sélection choisi,
**caractérisé en ce que** le réseau cellulaire (RCC) est apte à transmettre une partie au moins des données d'information sur ledit au moins un point d'accès (PA) accessible dans la cellule (Cj) en mode de diffusion dans ladite cellule, de façon périodique, sur un canal de signalisation choisi écouté par ledit terminal mobile (UE).

20. Réseau cellulaire selon la revendication 19, **caractérisé en ce que** le réseau cellulaire (RCC) est apte à transmettre les données d'information sur ledit au moins un point d'accès sous la forme d'une liste ordonnée de points d'accès.

21. Réseau cellulaire selon la revendication 19 ou 20, **caractérisé en ce que** ladite liste est ordonnée en fonction d'au moins un critère de sélection choisi dans un groupe comprenant le débit, le niveau de signal radio, la proximité, le niveau de charge, le coût d'une communication et l'opérateur d'appartenance.

22. Réseau cellulaire selon l'une des revendications 19 à 21, **caractérisé en ce que** lesdites données d'information représentent au moins un identifiant de point d'accès pour chaque point d'accès (PA) dudit au moins un point d'accès accessible au sein de la cellule (Cj).

23. Réseau cellulaire selon la revendication 22, **caractérisé en ce que** lesdites données d'information incluent, pour chaque point d'accès (PA) dudit au moins un point d'accès accessible au sein de la cellule (Cj), des données d'information représentatives d'au moins une caractéristique dudit point d'accès (PA) choisie dans un groupe comprenant le type de fréquence radio, le débit, le niveau de signal radio, la proximité, le niveau de charge, le coût d'une communication, l'opérateur d'appartenance et la méthode d'authentification à utiliser.

24. Réseau cellulaire selon l'une des revendications 19 à 23, **caractérisé en ce que** ledit réseau cellulaire (RCC) est apte à effectuer la sélection dudit point d'accès.

## Claims

1. Method of selecting a communication network for a dual mode mobile communication terminal (UE), comprising the steps consisting in transmitting in a cellular communication network (RCC) to which said mobile communication terminal is connected, in a chosen mode, information data on at least one access point (PA) to at least one wireless local area network (Wi), accessible in the cell (Cj) in which said mobile terminal (UE) is situated, and in selecting one of said accessible access points as a function of at least one chosen selection criterion, so that said mobile terminal (UE) can communicate with a remote communication terminal via said selected access point, given said transmitted information data, if the latter is more suitable for said communication than said cellular network, **characterised in that** at least some of the information data on said at least one access point (PA) accessible in the cell (Cj) is periodically transmitted in said cell by the cellular network (RCC) in broadcast mode on a chosen signalling channel listened to by said mobile terminal (UE).

2. Method according to claim 1, **characterised in that** said information data for each access point (PA) accessible in a cell (Cj) represents at least one access point identifier.

3. Method according to claim 2, **characterised in that** selection is effected from a list of at least one access point (PA) designated by its identifier.

4. Method according to claim 3, **characterised in that** said information data representative of an access point identifier (PA) from the list is associated with information data representative of at least one characteristic of said access point (PA).

5. Method according to claim 4, **characterised in that** said characteristics are chosen from a group comprising at least the radio frequency type, the bit rate, the radio signal level, the proximity, the load level, the cost of communication, the parent operator, and the authentication method to be used.

6. Method according to claim 4 or claim 5, **characterised in that** said list is ordered as a function of at least one selection criterion applied to at least one chosen characteristic associated with the identifier of each access point (PA) from the list, said access point (PA) then being selected as a function of its position in the list.

7. Method according to claim 6, **characterised in that** said selection criterion applies to the comparison of the current values of the chosen characteristic for the access point(s) (PA) from the list.

8. Method according to claim 4 or claim 5, **characterised in that** said access point (PA) is selected as a function of a comparison of the current values of at least one chosen characteristic for the access points (PA) from the list.

9. Method according to any of claims 1 to 8, **characterised in that** at least a portion of the selection is effected by the mobile terminal (UE) on the basis of information data received from the cellular network (RCC).

10. Method according to claim 5 in combination with claim 9, **characterised in that** in the event of selection relating at least to the radio signal level, said mobile terminal (UE) effects signal transmission tests in respect of each access point (PA) from the list to determine the one that offers the highest radio signal level.

11. Method according to any of claims 1 to 10, **characterised in that** the selection is effected by said cellular network (RCC).

12. Method according to any of claims 6 to 8 in combination with any of claims 9 to 11, **characterised in that** said characteristic is chosen as a function of the type of communication that said mobile terminal (UE) wishes to establish.

13. Method according to any of claims 1 to 12, **characterised in that** at least a portion of said selection is effected before establishing a communication.

14. Method according to any of claims 1 to 12, **characterised in that** at least a portion of said selection is effected during a communication via a cellular network (RCC), respectively a wireless local area network (Wi), in such a manner as to switch to a wireless local area network (Wi), respectively a cellular network (RCC).

15. Method according to claim 14, **characterised in that** in the event of switching from a cellular network (RCC) to a wireless local area network (Wi), the communication established via the cellular network (RCC) is put on hold.

16. Method according to claim 15, **characterised in that** in the event of further switching from said wireless local area network (Wi) to said cellular network (RCC), the communication initially established via the cellular network (RCC) is re-established and the communication via said wireless local area network (Wi) is terminated.

17. Method according to any one of claims 1 to 16, **characterised in that** the information data on said at least one access point is transmitted by the cellular network (RCC) in the form of an ordered list of access points.

18. Method according to claim 17, **characterised in that** said list is ordered as a function of at least one selection criterion chosen in a group comprising the bit rate, the radio signal level, the proximity, the charge level, the cost of a call and the operator to which it belongs.

19. Cellular communication network (RCC) adapted to transmit in a cell of said cellular network (RCC), in accordance with a chosen mode, information data on at least one access point (PA) to at least one wireless local area network (Wi) accessible in said cell (Cj),
said information data transmitted being intended to enable a dual operating mode mobile communication terminal (UE) connected to said cellular network situated in said cell to communicate with a remote communication terminal via a selected access point of said at least one access point accessible in said cell (Cj) as a function of at least one chosen selection criterion,
**characterised in that** the cellular network (RCC) is adapted to transmit at least a portion of the information data on said at least one access point (PA) accessible in the cell (Cj) in broadcast mode in said cell, periodically, on a chosen signalling channel to which said mobile terminal (UE) listens.

20. Cellular network according to claim 19, **characterised in that** the cellular network (RCC) is adapted to transmit the information data on said at least one access point in the form of an ordered list of access points.

21. Cellular network according to claim 19 or 20, **characterised in that** said list is ordered as a function of at least one selection criterion chosen in a group comprising the bit rate, the radio signal level, the proximity, the charge level, the cost of a call and the operator to which it belongs.

22. Cellular network according to any one of claims 19 to 21, **characterised in that** said information data represents at least one access point identifier for each access point (PA) of said at least one access point accessible in the cell (Cj).

23. Cellular network according to claim 22, **characterised in that** said information data includes, for each access point (PA) of said at least one access point accessible in the cell (Cj), information data representing at least one characteristic of said access point (PA) chosen in a group comprising the type of radio frequency, the bit rate, the radio signal level, the proximity, the charge level, the cost of a call, the operator to which it belongs and the authentication method to be used.

24. Cellular network according to any one of claims 19 to 23, **characterised in that** said cellular network (RCC) is adapted to effect the selection of said access point.

## Patentansprüche

1. Verfahren zur Auswahl eines Kommunikationsnetzes für ein Endgerät für mobile Kommunikation (UE) mit Dualbetrieb, das die Schritte enthält, die darin bestehen, in einem zellularen Kommunikationsnetz (RCC), an das dieses Endgerät für mobile Kommunikation angeschlossen ist, gemäß einem gewählten Modus Informationsdaten über mindestens einen Zugriffspunkt (PA) zu mindestens einem drahtlosen lokalen Netz (Wi) zu übertragen, der in der Zelle (Cj), in der dieses Endgerät für mobile Kommunikation (UE) liegt, zugänglich ist, und diesen oder einen dieser zugänglichen Zugriffspunkt(e) in Abhängigkeit von mindestens einem gewählten Auswahlkriterium auszuwählen, so dass dieses mobile Endgerät (UE) unter Berücksichtigung dieser übertragenen Informationsdaten mit einem entfernten Kommunikationsendgerät über diesen ausgewählten Zugriffspunkt kommunizieren kann, falls dieser besser für die Verbindung geeignet ist als dieses zellulare Netz (RCC), **dadurch gekennzeichnet, dass** zumindest ein Teil der Informationsdaten über diesen mindestens einen in der Zelle (Cj) zugänglichen Zugriffspunkt (PA) in dieser Zelle durch das zellulare Netz (RCC) im Ausstrahlungsmodus regelmäßig auf einem gewählten Signalisierungskanal übertragen wird, der von diesem mobilen Endgerät (UE) gehört wird.

2. Verfahren gemäß Anspruch 1, **dadurch gekennzeichnet, dass** diese Informationsdaten für jeden Zugriffspunkt (PA), der innerhalb einer Zelle (Cj) zugänglich ist, mindestens eine Zugriffspunktkennung darstellen.

3. Verfahren gemäß Anspruch 2, **dadurch gekennzeichnet, dass** die Auswahl aus einer Liste mit mindestens einem durch seine Kennung bezeichneten Zugriffspunkt (PA) erfolgt.

4. Verfahren gemäß Anspruch 3, **dadurch gekennzeichnet, dass** diese Informationsdaten, die für eine Zugriffspunktkennung (PA) aus der Liste stehen, verknüpft sind mit Informationsdaten, die für mindestens ein Charakteristikum dieses Zugriffspunktes (PA) stehen.

5. Verfahren gemäß Anspruch 4, **dadurch gekennzeichnet, dass** diese Charakteristika aus einer Gruppe ausgewählt werden, die mindestens die Funkfrequenzart, die Übertragungsgeschwindigkeit, den Funksignalpegel, die Nähe, die Höhe der Belastung, die Kosten einer Verbindung, den Betreiber, zu dem man gehört, und das zu verwendende Authentifizierungsverfahren einschließt.

6. Verfahren gemäß Anspruch 4 oder 5, **dadurch gekennzeichnet, dass** diese Liste in Abhängigkeit von mindestens einem Auswahlkriterium geordnet wird, das auf mindestens ein gewähltes Charakteristikum angewandt wird, welches mit der Kennung jedes Zugriffspunktes (PA) aus der Liste verknüpft ist, wobei dieser Zugriffspunkt (PA) dann also in Abhängigkeit von seiner Position auf der Liste ausgewählt wird.

7. Verfahren gemäß Anspruch 6, **dadurch gekennzeichnet, dass** dieses Auswahlkriterium sich bezieht auf den Vergleich der aktuellen Werte des gewählten Charakteristikums für den Zugriffspunkt oder die Zugriffspunkte (PA) aus der Liste.

8. Verfahren gemäß Anspruch 4 oder 5, **dadurch gekennzeichnet, dass** dieser Zugriffspunkt (PA) ausgewählt wird in Abhängigkeit von einem Vergleich der aktuellen Werte von mindestens einem gewählten Charakteristikum für die Zugriffspunkte (PA) aus der Liste.

9. Verfahren gemäß einem der Ansprüche 1 bis 8, **dadurch gekennzeichnet, dass** zumindest ein Teil der Auswahl durch das mobile Endgerät (UE) anhand der vom zellularen Netz (RCC) empfangenen Daten erfolgt.

10. Verfahren gemäß der Kombination aus Anspruch 5 und Anspruch 9, **dadurch gekennzeichnet, dass** im Falle einer Auswahl, die sich mindestens auf den Funksignalpegel bezieht, dieses mobile Endgerät (UE) Signalübertragungstests bei jedem Zugriffspunkt (PA) von der Liste durchführt, um denjenigen zu ermitteln, der den höchsten Funksignalpegel bietet.

11. Verfahren gemäß einem der Ansprüche 1 bis 10, **dadurch gekennzeichnet, dass** die Auswahl durch dieses zellulare Netz (RCC) erfolgt.

12. Verfahren gemäß einem der Ansprüche 6 bis 8 in Kombination mit einem der Ansprüche 9 bis 11, **dadurch gekennzeichnet, dass** dieses Charakteristikum in Abhängigkeit von der Art der Verbindung gewählt wird, die dieses mobile Endgerät (UE) aufbauen will.

13. Verfahren gemäß einem der Ansprüche 1 bis 12, **dadurch gekennzeichnet, dass** zumindest ein Teil dieser Auswahl vor dem Aufbau einer Verbindung erfolgt.

14. Verfahren gemäß einem der Ansprüche 1 bis 12, **dadurch gekennzeichnet, dass** man zumindest einen Teil dieser Auswahl während einer Verbindung via einem zellularen Netz (RCC) beziehungsweise einem drahtlosen lokalen Netz (Wi) durchführt, so dass auf ein drahtloses lokales Netz (Wi) beziehungsweise ein zellulares Netz (RCC) umgeschaltet wird.

15. Verfahren gemäß Anspruch 14, **dadurch gekennzeichnet, dass** man bei einer Umschaltung von einem zellularen Netz (RCC) auf ein drahtloses lokales Netz (Wi) die über das zellulare Netz (RCC) aufgebaute Verbindung hält.

16. Verfahren gemäß Anspruch 15, **dadurch gekennzeichnet, dass** man bei einer erneuten Umschaltung von diesem drahtlosen lokalen Netz (Wi) auf dieses zellulare Netz (RCC) die ursprünglich über das zellulare Netz (RCC) aufgebaute Verbindung wieder herstellt und die Verbindung über dieses drahtlose lokale Netz (Wi) beendet.

17. Verfahren gemäß einem der Ansprüche 1 bis 16, **dadurch gekennzeichnet, dass** die Informationsdaten über diesen mindestens einen Zugriffspunkt durch das zellulare Netz (RCC) in Form einer geordneten Zugriffspunkteliste übertragen werden.

18. Verfahren gemäß Anspruch 17, **dadurch gekennzeichnet, dass** diese Liste in Abhängigkeit von mindestens einem Auswahlkriterium geordnet ist, das aus einer Gruppe ausgewählt wird, die die Übertragungsgeschwindigkeit, den Funksignalpegel, die Nähe, die Höhe der Belastung, die Kosten einer Verbindung und den Betreiber, zu dem man gehört, einschließt.

19. Zellulares Kommunikationsnetz (RCC), das im Stande ist, in einer Zelle dieses zellularen Netzes (RCC) gemäß einem gewählten Modus Informationsdaten über mindestens einen Zugriffspunkt (PA) zu mindestens einem drahtlosen lokalen Netz (Wi) zu übertragen, der in dieser Zelle (Cj) zugänglich ist,
wobei diese übertragenen Informationsdaten es einem Endgerät für mobile Kommunikation (UE) mit Dualbetrieb, das an dieses zellulare Netz angeschlossen ist, welches in dieser Zelle liegt, ermöglichen sollen, mit einem entfernten Kommunikationsendgerät über einen Zugriffspunkt zu kommunizieren, der in Abhängigkeit von mindestens einem gewählten Auswahlkriterium ausgewählt wurde aus diesem mindestens einem in dieser Zelle (Cj) zugänglichen Zugriffspunkt,
**dadurch gekennzeichnet, dass** das zellulare Netz (RCC) im Stande ist, zumindest einen Teil der Informationsdaten über diesen mindestens einen Zugriffspunkt (PA), der in der Zelle (Cj) zugänglich ist, im Ausstrahlungsmodus in dieser Zelle regelmäßig auf einem gewählten Signalisierungskanal zu übertragen, der von diesem mobilen Endgerät (UE) gehört wird.

20. Zellulares Netz gemäß Anspruch 19, **dadurch gekennzeichnet, dass** das zellulare Netz (RCC) im Stande ist, die Informationsdaten über diesen mindestens einen Zugriffspunkt in Form einer geordneten Zugriffspunkteliste zu übertragen.

21. Zellulares Netz gemäß Anspruch 19 oder 20, **dadurch gekennzeichnet, dass** diese Liste in Abhängigkeit von mindestens einem Auswahlkriterium geordnet ist, das aus einer Gruppe ausgewählt wird, die die Übertragungsgeschwindigkeit, den Funksignalpegel, die Nähe, die Höhe der Belastung, die Kosten einer Verbindung und den Betreiber, zu dem man gehört, einschließt.

22. Zellulares Netz gemäß einem der Ansprüche 19 bis 21, **dadurch gekennzeichnet, dass** diese Informationsdaten mindestens eine Zugriffspunktkennung für jeden Zugriffspunkt (PA) dieses mindestens einen Zugriffspunkts darstellen, der in der Zelle (Cj) zugänglich ist.

23. Zellulares Netz gemäß Anspruch 22, **dadurch gekennzeichnet, dass** diese informationsdaten für jeden Zugriffspunkt (PA) dieses mindestens einen Zugriffspunkts, der in der Zelle (Cj) zugänglich ist, Informationsdaten einschließen, die für mindestens ein Charakteristikum dieses Zugriffspunkts (PA) stehen, das ausgewählt wird aus einer Gruppe, die die Funkfrequenzart, die Übertragungsgeschwindigkeit, den Funksignalpegel, die Nähe, die Höhe der Belastung, die Kosten einer Verbindung, den Betreiber, zu dem man gehört, und das zu verwendende Authentifizierungsverfahren einschließt.

24. Zellulares Netz gemäß einem der Ansprüche 19 bis 23, **dadurch gekennzeichnet, dass** dieses zellulare Netz (RCC) im Stande ist, die Auswahl dieses Zugriffspunktes durchzuführen.
